# FASCICULE DE BREVET EUROPEEN

(11) **EP 4 331 980 B1**
(45) Date de publication et mention de la délivrance du brevet: **02.07.2025**
(21) Numéro de dépôt: 23175907.7
(22) Date de dépôt: 29.05.2023
(51) Int. Cl.: B64C 27/12, F16H 57/04, F16N 7/32, F16N 29/04, G01M 13/02, B64D 33/00

(54) **PROCEDE DE SURVEILLANCE D'UN SYSTEME FLUIDIQUE LUBRIFIANT UN SYSTEME MECANIQUE**
VERFAHREN ZUR ÜBERWACHUNG EINES SCHMIERENDEN FLUIDSYSTEMS EINES MECHANISCHEN SYSTEMS
METHOD FOR MONITORING A FLUID SYSTEM LUBRICATING A MECHANICAL SYSTEM

(30) Priorité: 31.08.2022 FR 2208736
(43) Date de publication de la demande: 06.03.2024
(73) Titulaire: AIRBUS HELICOPTERS, 13725 Marignane Cedex (FR)
(72) Inventeur: ESCOFFIER, Adrien, 13760 Saint-Cannat (FR); CHARRIER, Mathieu, 13006 Marseille (FR); BASSO, Benoît, 46230 Cremps (FR)
(74) Mandataire: GPI Brevets

(56) Documents cités:
- FR-A1- 3 112 835
- US-A1- 2016 376 949

## Description

La présente invention concerne un procédé de surveillance d'un système fluidique lubrifiant un système mécanique, et notamment une boîte de transmission de puissance d'un aéronef. L'invention concerne aussi un tel système fluidique, un assemblage comportant un système mécanique et le système fluidique, et un véhicule comprenant cet assemblage.

La présente invention se rapporte au domaine de la lubrification et du refroidissement de systèmes mécaniques et notamment des boîtes de transmission de puissance, voire en particulier des boîtes de transmission de puissance destinées à un aéronef à voilure tournante.

Un aéronef à voilure tournante de type giravion comporte un rotor participant au moins partiellement à la sustentation de cet aéronef. Pour mettre en rotation un tel rotor, un giravion est muni d'une installation motrice comportant au moins un moteur. En outre, une boîte de transmission de puissance peut être interposée entre au moins un moteur et au moins un rotor. Une boîte de transmission de puissance comporte des éléments mobiles. Un système fluidique permet d'une part de lubrifier des zones de contact des éléments mobiles et, d'autre part, de les refroidir.

Selon une première solution technique, un système fluidique comporte un unique circuit fluidique alimentant un circuit d'aspersion dénommé parfois « rampe de lubrification » ou encore « rampe d'aspersion de fluide ». Le circuit d'aspersion comporte un manocontact de pression et une ou plusieurs tuyauteries débouchant sur des asperseurs de type gicleurs ou autres.

Bien qu'efficace, un tel système fluidique est susceptible de comporter des fuites.

Selon une deuxième solution technique, un système fluidique peut dès lors comprendre un circuit fluidique principal et un circuit fluidique de secours. Le circuit fluidique principal et le circuit fluidique de secours sont configurés pour puiser de l'huile dans un même réservoir et pour acheminer cette huile vers un même circuit d'aspersion. Le circuit d'aspersion comporte des asperseurs qui aspergent l'huile dans le système mécanique aux divers endroits à lubrifier. Au sein d'une boîte de transmission de puissance, le réservoir peut être ménagé dans le fond de cette boîte de transmission de puissance afin que l'huile aspergée par le circuit d'aspersion retourne dans le réservoir par gravité.

Le circuit fluidique principal comporte une pompe principale comprenant une entrée d'aspiration immergée dans le réservoir. La pompe est reliée à au moins un échangeur thermique via une première ligne hydraulique principale. L'échangeur thermique est localisé en dehors du système mécanique à lubrifier. De plus, cet échangeur thermique est relié au circuit d'aspersion via une deuxième ligne hydraulique principale. La deuxième ligne hydraulique principale comporte un clapet anti-retour principal en amont du circuit d'aspersion et un manocontact de pression principal. Une ligne de décharge principale munie d'un clapet de surpression peut être en communication fluidique avec la première ligne hydraulique principale et le réservoir.

Le circuit fluidique secondaire est dépourvu d'échangeur thermique. Le circuit fluidique secondaire inclut une pompe secondaire munie d'une entrée d'aspiration secondaire puisant de l'huile plus profondément dans le réservoir que la pompe principale du circuit fluidique principal. La pompe secondaire est reliée à une ligne hydraulique secondaire débouchant sur le circuit d'aspersion en aval de la deuxième ligne hydraulique principale et en dehors du système mécanique à lubrifier. La ligne hydraulique secondaire comporte un clapet anti-retour de secours en amont du circuit d'aspersion et un manocontact de pression secondaire. Une ligne de décharge secondaire munie d'un clapet de surpression peut être en communication fluidique avec la ligne hydraulique secondaire et le réservoir.

La pompe principale et la pompe secondaire sont dimensionnées pour que le clapet anti-retour de secours soit fermé dans un mode de fonctionnement nominal.

Durant ce mode de fonctionnement nominal, la pompe principale puise de l'huile dans le réservoir via son entrée d'aspiration, puis la propulse dans la première ligne hydraulique principale. Cette huile est refroidie dans le ou les échangeurs thermiques puis est acheminée vers les asperseurs. Les asperseurs projettent alors l'huile en la dirigeant sur les éléments mobiles pour les refroidir et les lubrifier. L'huile retombe ensuite par gravité dans le réservoir.

La pompe secondaire puise aussi l'huile dans le réservoir. Par contre, le clapet anti-retour de secours est fermé sous l'effet de la pression de l'huile provenant du circuit fluidique principal. L'huile puisée par la pompe secondaire retourne alors dans le réservoir via la ligne de décharge secondaire.

En cas de fuite hydraulique, le niveau d'huile dans le réservoir baisse. Lorsque ce niveau d'huile passe sous l'entrée d'aspiration de la pompe principale, la pompe principale n'aspire plus d'huile. Le circuit d'aspersion est alors alimenté en huile par le circuit fluidique de secours.

Le fonctionnement du système fluidique est surveillé à l'aide des divers manocontacts.

Un tel système fluidique est intéressant en permettant de mutualiser le réservoir et le circuit d'aspersion.

Le document FR 3 112 835 décrit un procédé de surveillance d'un système fluidique de lubrification d'un système mécanique. Ledit système fluidique comprend un réservoir contenant un fluide de lubrification à l'intérieur d'un carter du système mécanique, ledit système fluidique comprenant un circuit d'aspersion muni d'au moins un asperseur, ledit système fluidique comprenant un circuit fluidique principal s'étendant du réservoir jusqu'au circuit d'aspersion, ledit système fluidique comprenant un circuit fluidique de secours s'étendant à partir du réservoir et rejoignant ledit circuit d'aspersion, par exemple en aval du circuit fluidique principal selon le sens de circulation du fluide de lubrification, ledit circuit fluidique de secours comportant un clapet anti-retour de secours configuré pour être soit dans un état fermé interdisant une circulation dudit fluide de lubrification soit dans un état ouvert permettant un passage dudit fluide de lubrification du réservoir vers le circuit d'aspersion, ledit circuit fluidique de secours étant dimensionné pour que le clapet anti-retour de secours soit dans l'état fermé dans un mode de fonctionnement nominal. Ce procédé comporte une phase de surveillance comprenant les étapes suivantes :
- détection d'un dysfonctionnement par surveillance d'au moins un paramètre de surveillance, ledit dysfonctionnement rendant inopérant le circuit fluidique principal, le système fluidique fonctionnant selon un mode de fonctionnement dégradé voire étant inopérant en présence d'un tel dysfonctionnement,
- détection que le clapet anti-retour de secours est dans ledit état ouvert ou ledit état fermé,
- génération d'une première alerte en présence d'une dite détection d'un dysfonctionnement et d'une dite détection que le clapet anti-retour de secours est dans ledit état ouvert,
- génération d'une deuxième alerte différente de la première alerte en présence d'une dite détection d'un dysfonctionnement et d'une dite détection que le clapet anti-retour de secours est dans ledit état fermé.

Ainsi, si le clapet anti-retour de secours est ouvert alors une première alerte est émise. Cette première alerte signifie que le circuit fluidique de secours est opérant puisque le clapet anti-retour de secours est ouvert. Le système mécanique est donc lubrifié via le circuit fluidique de secours.

Par contre, si le système fluidique présente un dysfonctionnement et si le clapet anti-retour de secours est fermé, alors une deuxième alerte est générée. Cette deuxième alerte signifie que le circuit fluidique de secours est inopérant puisque le clapet anti-retour de secours est fermé.

Le document FR 2685758 décrit une boîte de transmission de puissance ayant un système fluidique qui est pourvu d'un circuit fluidique de secours indépendant d'un circuit fluidique principal. Ce circuit fluidique de secours comporte son propre réservoir pour alimenter un gicleur de secours via un actionneur. Cet actionneur peut comprendre une vanne ou une pompe coopérant avec un capteur de pression d'huile disposé dans le circuit fluidique principal ou avec un capteur de température disposé sur un carter de la boîte de transmission de puissance.

Le document FR 2826094 décrit aussi un système alternatif muni d'un capteur de pression mesurant une pression au sein du circuit fluidique principal.

Le document FR 2658577 décrit un système fluidique muni d'un circuit fluidique principal ayant un réservoir principal et un circuit fluidique de secours muni d'un conduit de dérivation. Le conduit de dérivation est connecté au circuit fluidique principal et débouche sur un réservoir de secours. Le réservoir de secours comporte un trop-plein relié au réservoir principal du circuit fluidique principal et comporte un circuit de distribution d'huile à faible débit.

Le document FR 3045764 décrit un système fluidique muni d'un circuit fluidique principal ayant un réservoir principal et d'un circuit fluidique de secours ayant un réservoir secondaire.

Le document US 2016/376949 A1 décrit un procédé pour déterminer si une vanne se trouve dans une position primaire ou une position secondaire.

La présente invention a alors pour objet de proposer un procédé et un système fluidique innovant pour lubrifier un système mécanique, le système fluidique étant muni d'un circuit fluidique principal et d'un circuit fluidique de secours coopérant avec un même circuit d'aspersion et visant à identifier et à estimer le mode de fonctionnement courant du système fluidique.

L'invention vise ainsi un procédé de surveillance d'un système fluidique de lubrification d'un système mécanique. Ledit système fluidique comprend un réservoir contenant un fluide de lubrification, le réservoir étant par exemple à l'intérieur d'un carter du système mécanique, ledit système fluidique comprenant un circuit d'aspersion muni d'au moins un asperseur, ledit système fluidique comprenant un circuit fluidique principal s'étendant du réservoir jusqu'au circuit d'aspersion, ledit système fluidique comprenant un circuit fluidique de secours s'étendant à partir du réservoir et rejoignant ledit circuit d'aspersion, par exemple en aval du circuit fluidique principal selon le sens de circulation du fluide de lubrification, ledit circuit fluidique de secours comportant un clapet anti-retour de secours muni d'un bloqueur mobile d'une position fermée interdisant une circulation dudit fluide de lubrification à une position ouverte permettant un passage dudit fluide de lubrification du réservoir vers le circuit d'aspersion, ledit circuit fluidique de secours étant dimensionné pour que le clapet anti-retour de secours soit dans l'état fermé dans un mode de fonctionnement nominal.

Un tel procédé comporte une phase de surveillance comprenant les étapes suivantes :
- détection d'un dysfonctionnement par surveillance d'au moins un paramètre de surveillance, ledit dysfonctionnement rendant inopérant le circuit fluidique principal, le système fluidique fonctionnant selon un mode de fonctionnement dégradé voire étant inopérant en présence d'un tel dysfonctionnement,
- mesure d'une position du bloqueur au sein du clapet anti-retour de secours,
- génération d'une première alerte en présence d'une dite détection d'un dysfonctionnement et d'une détection que le bloqueur est stable dans la position ouverte,
- génération d'une deuxième alerte différente de la première alerte en présence d'une dite détection d'un dysfonctionnement et d'une détection que le bloqueur est stable dans la position fermée, à l'aide de ladite mesure de la position du bloqueur, et
- génération d'une troisième alerte différente de la première alerte et de la deuxième alerte en présence d'une détection d'un dysfonctionnement et d'une détection que le bloqueur est dans une phase transitoire pendant laquelle le bloqueur bagotte, à l'aide de ladite mesure de la position du bloqueur.

L'expression «en présence d'une dite détection d'un dysfonctionnement et d'une détection que le bloqueur est stable dans la position ouverte » signifie que la première alerte est émise tant que d'une part un dysfonctionnement rendant inopérant le circuit fluidique principal est détecté et, d'autre part, que le bloqueur reste dans sa position ouverte. Le système fluidique est alors dans un mode de fonctionnement dégradé durant lequel le circuit fluidique de secours fonctionne normalement. La position ouverte peut être n'importe quelle position différente de la position fermée, ou une position particulière.

L'expression «en présence d'une dite détection d'un dysfonctionnement et d'une détection que le bloqueur est stable dans la position fermée » signifie que la deuxième alerte est émise tant que d'une part un dysfonctionnement rendant inopérant le circuit fluidique principal est détecté et, d'autre part, que le clapet anti-retour de secours reste dans sa position fermée. Le système fluidique est alors inopérant.

L'expression « en présence d'une détection d'un dysfonctionnement et d'une détection que le bloqueur est dans une phase transitoire pendant laquelle le bloqueur bagotte » signifie que la troisième alerte est émise tant que d'une part un dysfonctionnement rendant inopérant le circuit fluidique principal est détecté et, d'autre part, que le bloqueur n'est pas stable mais est en mouvement. Par exemple le bloqueur se déplace successivement selon deux sens opposés, entre la position ouverte et la position fermée de façon intermittente, et inversement. Le système fluidique est alors dans un mode de fonctionnement dégradé durant lequel le circuit fluidique de secours fonctionne partiellement.

L'expression « rendant inopérant le circuit fluidique principal » signifie que le circuit fluidique principal n'est plus en capacité d'alimenter le circuit d'aspersion avec le fluide de lubrification.

Un tel dysfonctionnement peut résulter d'une fuite, d'une panne d'une pompe du circuit fluidique principal, de l'obturation d'un tuyau du circuit fluidique principal, du blocage d'un clapet...

Ainsi, le circuit d'aspersion peut par exemple comprendre un tronçon de distribution muni d'au moins un asperseur, par exemple localisé dans le système mécanique à lubrifier, voire d'un filtre par exemple accompagné d'une ligne de contournement. De plus, le circuit d'aspersion peut par exemple comprendre un premier tronçon liant hydrauliquement le tronçon de distribution au clapet anti-retour de secours. De plus, le circuit d'aspersion peut éventuellement comprendre un deuxième tronçon liant hydrauliquement, par exemple en amont du premier tronçon, le tronçon de distribution au circuit fluidique principal et possiblement à un clapet anti-retour principal du circuit fluidique principal.

Dès lors, durant le mode de fonctionnement nominal, le circuit d'aspersion est alimenté en fluide de lubrification par le circuit fluidique principal. Un tel fluide de lubrification peut être dénommé « fluide de lubrification et/ou de refroidissement » et peut comprendre un liquide et notamment de l'huile.

Dans ce contexte, le procédé de l'invention comporte une étape de détection d'un dysfonctionnement rendant le circuit fluidique principal inopérant. Lorsqu'un tel dysfonctionnement est détecté, le système fluidique se trouve de fait inopérant ou dans un mode de fonctionnement dégradé durant lequel une alerte est générée. La nature de l'alerte dépend du comportement du bloqueur du clapet anti-retour de secours.

Si le système fluidique présente un tel dysfonctionnement et si le bloqueur est strictement dans la position ouverte, alors une première alerte est émise. Cette première alerte signifie que le circuit fluidique de secours est opérant puisque le clapet anti-retour de secours est ouvert. Le système mécanique est donc lubrifié via le circuit fluidique de secours. Le vol peut être éventuellement poursuivi dans ces conditions.

Si le système fluidique présente un tel dysfonctionnement et si le bloqueur est strictement dans la position fermée, alors une deuxième alerte est générée. Cette deuxième alerte signifie que le circuit fluidique principal et le circuit fluidique de secours sont inopérants puisque le clapet anti-retour de secours est fermé. Le système mécanique n'est donc plus lubrifié. L'aéronef doit éventuellement être posé immédiatement, éventuellement sur une surface liquide en cas de survol d'une mer.

En outre, le bloqueur peut aussi osciller durant une phase transitoire. Par exemple, en présence d'une fuite au sein du circuit fluidique principal, le niveau de fluide de lubrification au sein du réservoir baisse. La pression au sein du circuit fluidique principal peut baisser. Le bloqueur peut alors passer dans la position ouverte. Si le niveau de fluide de lubrification continue de baisser, le bloqueur peut passer directement dans la position fermée.

Eventuellement, le bloqueur peut alternativement tendre à successivement s'ouvrir et à se fermer, avant possiblement de rester dans la position fermée. En effet, durant une phase transitoire la pression résiduelle dans le circuit fluidique de secours peut non pas être directement nulle, mais peut être faible, par exemple de l'ordre de 0,1 bar. Dès lors, une troisième alerte est générée durant la phase transitoire. Cette troisième alerte peut signifier que l'aéronef doit éventuellement être posé dès qu'une aire d'atterrissage praticable est atteinte. En cas de survol d'une mer, un amerrissage immédiat n'est pas requis, le pilote pouvant voler, possiblement dans des conditions prédéterminées de charge réduite, pour atteindre une aire d'atterrissage usuelle. Si le bloqueur devient ensuite stable dans la position fermée, le cas précédemment est appliqué. L'expression « aire d'atterrissage praticable » désigne une aire d'atterrissage sur laquelle l'aéronef peut se poser sans dégrader l'aéronef, contrairement à une surface liquide par exemple.

En surveillant la position du bloqueur, le procédé peut permettre à un pilote d'identifier plus précisément le problème rencontré en fonction de la séquence des alertes émises. Le pilote peut notamment savoir s'il doit poser immédiatement l'aéronef, quitte à amerrir le cas échéant, ou s'il doit piloter l'aéronef pour voler dans des conditions de charge réduite pour recherche une aire d'atterrissage non pas possible mais praticable.. Le procédé peut permettre d'éviter un amerrissage dans ce cas.

La première alerte peut prendre la forme d'une alerte visuelle et/ou sonore et/ou haptique. La deuxième alerte peut prendre la forme d'une alerte visuelle et/ou sonore et/ou haptique. La troisième alerte peut prendre la forme d'une alerte visuelle et/ou sonore et/ou haptique La première alerte, la deuxième alerte et la troisième alerte peuvent prendre des formes différentes pour être distinguées. Par exemple, la première alerte est générée en allumant une diode électroluminescente ou en affichant une suite de caractères, la deuxième alerte est générée en allumant une autre diode électroluminescente ou en affichant une autre suite de caractères et la troisième alerte est générée en allumant une autre diode électroluminescente ou en affichant une autre suite de caractères.

Le procédé peut ainsi identifier le fonctionnement courant du système fluidique. Ce procédé peut permettre d'identifier la présence d'un dysfonctionnement, voire d'identifier que le circuit fluidique principal n'alimente plus en fluide de lubrification le circuit d'aspersion et d'identifier si le circuit fluidique de secours a pris le relais, même faiblement.

Au sein d'un aéronef, un pilote peut par exemple en déduire un temps de vol autorisé et/ou les conditions de vol à respecter en fonction de la situation. A titre illustratif, un pilote peut devoir réaliser rapidement un atterrissage forcé si le système mécanique n'est plus lubrifié ou peut avoir plus de temps pour poser l'aéronef dans de bonnes conditions si le circuit fluidique de secours est en fonctionnement même partiellement. Le procédé de l'invention permet d'identifier de manière fiable la situation pour améliorer la sécurité du vol. Le mouvement du bloqueur peut permettre de signaler à un pilote qu'il doit se tenir prêt à prendre une décision. Le pilote peut aussi en déduire qu'il doit piloter l'aéronef pour préserver l'aéronef, en effectuant un vol à charge réduite par exemple.

Le procédé peut comporter une ou plusieurs des caractéristiques qui suivent.

Selon une première réalisation de la détection d'un dysfonctionnement, ledit au moins un paramètre de surveillance peut être une pression régnant dans ledit circuit d'aspersion, ladite détection d'un dysfonctionnement par surveillance d'au moins un paramètre de surveillance comportant une étape de détection que ladite pression est inférieure à un seuil de pression prédéterminé avec un senseur de pression.

En effet et quelle que soit la réalisation, le circuit fluidique principal peut être dimensionné pour que la pression du fluide de lubrification dans le circuit d'aspersion soit supérieure à la pression atteinte lorsque le circuit fluidique de secours est actif, à savoir lorsque le clapet anti-retour de secours est dans l'état ouvert. De même, le clapet anti-retour de secours est dimensionné pour être fermé sous l'effet de la pression du fluide de lubrification injecté dans le circuit d'aspersion par le circuit fluidique principal durant le mode de fonctionnement nominal.

Ainsi, durant le mode fonctionnement nominal, le paramètre de surveillance présente une première valeur sensiblement équivalente à la pression du fluide de lubrification à la sortie du circuit fluidique principal.

Lorsque le circuit fluidique principal devient inopérant, le système fluidique passe dans le mode de fonctionnement dégradé ou inopérant en fonction de nature du dysfonctionnement. Si le clapet anti-retour de secours s'ouvre alors le paramètre de surveillance présente une deuxième valeur inférieure à la première valeur et sensiblement équivalente à la pression du fluide de lubrification à la sortie du circuit fluidique de secours. Si le clapet anti-retour de secours se ferme, par exemple lorsque le niveau du fluide de lubrification dans le réservoir passe sous l'entrée d'aspiration d'une pompe du circuit fluidique de secours, le paramètre de surveillance présente une troisième valeur inférieure à la deuxième valeur.

Par suite, comparer une pression mesurée dans le circuit d'aspersion à un seuil de pression prédéterminé peut permettre de déterminer si le circuit fluidique principal est déficient. Par exemple, le seuil de pression prédéterminé peut être inférieur ou égal à la première valeur, et supérieur ou égal à la deuxième valeur.

Par ailleurs, ledit circuit fluidique principal peut comporter un clapet anti-retour principal configuré pour être soit dans un état fermé soit dans un état ouvert permettant un passage dudit fluide de lubrification du réservoir vers le circuit d'aspersion.

La première réalisation peut être appliquée en présence d'un tel clapet anti-retour principal.

Toutefois, selon une deuxième réalisation de la détection d'un dysfonctionnement, ledit au moins un paramètre de surveillance peut alors être porteur de l'état ouvert ou fermé du clapet anti-retour principal, ladite détection d'un dysfonctionnement par surveillance d'au moins un paramètre de surveillance comportant une étape de détection que ledit clapet anti-retour principal est dans un état différent de l'état ouvert.

Dans le mode de fonctionnement nominal, le clapet anti-retour principal doit être ouvert. Si le clapet anti-retour principal est dans son état fermé ou tend à s'ouvrir et à se fermer successivement, alors le circuit fluidique principal n'est plus opérant. L'état du clapet anti-retour principal peut être évalué de manière usuelle, par exemple selon une des méthodes décrites précédemment.

Par sécurité, la première réalisation et la deuxième réalisation sont combinables. Un dysfonctionnement du circuit fluidique principal est alors prononcé si ledit clapet anti-retour principal est dans l'état fermé et si une pression régnant dans le circuit d'aspersion est inférieure à un seuil de pression prédéterminé.

Quelle que soit la réalisation, ledit procédé peut comporter une étape de détection que le système mécanique est en fonctionnement, ladite phase de surveillance étant mise en œuvre lorsque le système mécanique est en fonctionnement.

Selon cette possibilité, la phase de surveillance est entreprise seulement lorsque le système mécanique est en fonctionnement pour éviter l'émission d'une alerte au démarrage du système mécanique. Par exemple, l'étape de détection que le système mécanique est en fonctionnement peut comprendre une mesure d'une vitesse de déplacement d'un organe mobile du système mécanique, la phase de surveillance étant initiée lorsque cet organe mobile se déplace, par rapport à un carter par exemple, avec une vitesse supérieure à un seuil de vitesse.

Alternativement, la phase de surveillance est entreprise à l'issue d'une durée prédéterminée suivant le démarrage ou en fonction d'un autre critère et par exemple sur ordre d'un autre système.

Alternativement, la phase de surveillance est entreprise dès le démarrage.

Selon un autre aspect compatible avec les précédents, ledit système mécanique pouvant être agencé au sein d'un aéronef, ladite première alerte peut être porteuse d'une autorisation de vol pendant une première durée et la deuxième alerte peut être porteuse d'une autorisation de vol pendant une deuxième durée inférieure à la première durée, ladite troisième alerte étant porteuse d'une autorisation de vol pendant au moins la première durée.

Par exemple, la première alerte peut être porteuse d'une autorisation de vol de plusieurs dizaines de minutes voire sans limites, et à titre illustratif de trente minutes minimum. La troisième alerte peut alors être aussi porteuse d'une autorisation de vol de plusieurs dizaines de minutes voire sans limites, et à titre illustratif de trente minutes minimum. A l'inverse, la deuxième alerte peut être porteuse d'une autorisation de vol de plusieurs minutes et par exemple de quinze minutes maximum.

De manière complémentaire ou alternative, la première alerte peut être porteuse d'une autorisation de vol dans des conditions de vol normales, et/ou la deuxième alerte peut être porteuse d'une autorisation de vol pour poser immédiatement l'aéronef, à savoir dans un délai limité, et/ou ladite troisième alerte peut être porteuse d'une autorisation de vol en appliquant des consignes prédéterminées pour voler dans des conditions de charge réduite et/ou peut être porteuse d'un ordre d'atterrissage sur une aire d'atterrissage praticable.

Selon l'invention le bloqueur peut être considéré comme étant stable dans la position ouverte lorsque le bloqueur est dans la position ouverte au minimum pendant une durée prédéterminée dite « durée d'ouverture prédéterminée » par commodité.

Selon l'invention le bloqueur peut être considéré comme étant stable dans la position fermée lorsque le bloqueur est dans la position fermée au minimum pendant une durée prédéterminée dite « durée de fermeture prédéterminée » par commodité.

La durée d'ouverture prédéterminée et la durée de fermeture prédéterminée peuvent être égales, par exemple de l'ordre d'une minute, ou différentes. La durée d'ouverture prédéterminée et la durée de fermeture prédéterminée peuvent être déterminées par essais ou simulations par exemple.

L'alerteur considère que le bloqueur bagotte lorsqu'à un instant donné, le bloqueur n'est pas dans la position ouverte au minimum depuis la durée d'ouverture prédéterminée et le bloqueur n'est pas dans la position fermée au minimum depuis la durée de fermeture prédéterminée.

Selon une possibilité compatible avec les précédentes, le procédé peut comporter durant la phase transitoire au moins une des mesures suivantes : mesure d'une durée entre un passage du bloqueur de la position ouverte à la position fermée, mesure d'une durée entre un passage du bloqueur de la position fermée à la position ouverte, mesure d'une durée entre un passage du bloqueur la position ouverte à la position fermée puis à la position ouverte, mesure d'une amplitude de déplacement du bloqueur.

Le procédé peut comprendre l'affichage sur un afficheur de la ou des mesures précédentes réalisées pour aider un pilote à appréhender la situation présente.

Outre un procédé, l'invention vise un système fluidique appliquant ce procédé.

Un tel système fluidique comprend un réservoir contenant un fluide de lubrification, par exemple à l'intérieur d'un carter du système mécanique, ledit système fluidique comprenant un circuit d'aspersion muni d'au moins un asperseur, ledit système fluidique comprenant un circuit fluidique principal s'étendant du réservoir jusqu'au circuit d'aspersion, ledit système fluidique comprenant un circuit fluidique de secours s'étendant à partir du réservoir et rejoignant ledit circuit d'aspersion par exemple en aval du circuit fluidique principal, ledit circuit fluidique de secours comportant un clapet anti-retour de secours muni d'un bloqueur mobile d'une position fermée interdisant une circulation dudit fluide de lubrification à une position ouverte permettant un passage dudit fluide de lubrification du réservoir vers le circuit d'aspersion.

De plus, ledit système fluidique est configuré pour appliquer le procédé de l'invention, ledit système fluidique comprenant au moins un senseur de dysfonctionnement pour effectuer ladite détection d'un dysfonctionnement, ledit système fluidique ayant un senseur d'état de secours configuré pour mesurer une position du bloqueur, le système fluidique ayant un alerteur en communication avec le senseur d'état de secours et le senseur de dysfonctionnement, l'alerteur étant configuré pour effectuer ladite génération de la première alerte et ladite génération de la deuxième alerte et ladite génération de la troisième alerte.

Selon la première réalisation, ledit au moins un senseur de dysfonctionnement peut comporter un capteur de pression émettant un signal de pression variant en fonction d'une pression régnant dans ledit circuit d'aspersion, ledit signal de pression étant transmis à l'alerteur.

Selon la deuxième réalisation, ledit circuit fluidique principal peut comporter un clapet anti-retour principal configuré pour être soit dans un état fermé soit dans un état ouvert permettant un passage dudit fluide de lubrification du réservoir vers le circuit d'aspersion, ledit au moins un senseur de dysfonctionnement pouvant comporter un senseur d'état principal configuré pour effectuer la détection que le clapet anti-retour principal est dans ledit état ouvert ou ledit état fermé.

Selon une autre possibilité, le système fluidique peut comporter un senseur de dysfonctionnement de type capteur de pression et un senseur d'état principal configuré pour effectuer la détection que le clapet anti-retour principal est dans ledit état ouvert ou ledit état fermé.

Selon un autre aspect compatible avec les précédents, ledit système fluidique peut comporter un senseur de fonctionnement pour détecter si le système mécanique est en fonctionnement.

Outre un système fluidique, l'invention vise un assemblage muni d'un système mécanique ayant au moins un élément à lubrifier et d'un tel système fluidique pour lubrifier ledit au moins un élément à lubrifier.

Par exemple, ledit système mécanique peut être une boîte de transmission de puissance.

Par exemple, ledit circuit d'aspersion peut s'étendre partiellement dans le système mécanique et partiellement en dehors du système mécanique.

Par exemple, ledit clapet anti-retour de secours peut déboucher sur le circuit d'aspersion.

L'invention vise de plus un véhicule comprenant un tel assemblage. Par exemple, le véhicule peut être un giravion muni d'un rotor mis en rotation par le système mécanique.

L'invention et ses avantages apparaîtront avec plus de détails dans le cadre de la description qui suit avec des exemples donnés à titre illustratif en référence aux figures annexées qui représentent :
la figure 1, un schéma illustrant un assemblage ayant un système mécanique d'un véhicule et un système fluidique selon l'invention,
la figure 2, une vue d'un clapet anti-retour de secours muni d'un bloqueur mobile dans une position fermée,
la figure 3, une vue d'un clapet anti-retour de secours muni d'un bloqueur mobile dans une position ouverte,
la figure 4, un logigramme illustrant le procédé de l'invention,
la figure 5, un schéma illustrant un système fluidique selon l'invention dans un mode de fonctionnement nominal,
la figure 6, un schéma illustrant un système fluidique selon l'invention dans un mode de fonctionnement dégradé suite à une fuite gravitaire du fluide de lubrification du système fluidique,
la figure 7, un schéma illustrant un système fluidique selon l'invention dans un mode de fonctionnement dégradé suite à une fuite du fluide de lubrification au niveau du circuit fluidique principal, et
la figure 8, un schéma illustrant un système fluidique selon l'invention dans un mode de fonctionnement dégradé suite à une fuite du fluide de lubrification au niveau du circuit d'aspersion.

Les éléments présents dans plusieurs figures distinctes sont affectés d'une seule et même référence.

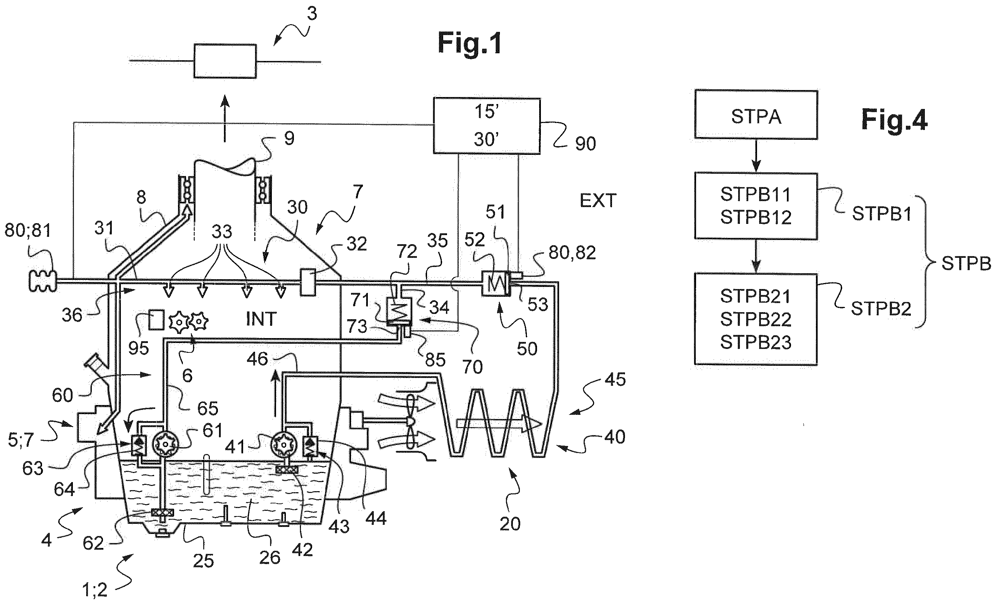

La figure 1 présente un assemblage 4 ayant un système mécanique 5. Ce système mécanique 5 peut être agencé au sein de diverses structures et par exemple au sein d'un véhicule 1 et possiblement au sein d'un aéronef 2 selon l'exemple illustré. Le système mécanique 5 peut être une boîte de transmission de puissance 7.

Un tel rotor 3 peut être un rotor principal d'un hélicoptère, un rotor participant au contrôle du mouvement en lacet, une hélice... Par exemple, le système mécanique 5 est agencé au sein d'un giravion pour mettre en rotation notamment un rotor 3, par exemple via un mât rotor de sortie 9.

Quelle que soit la nature du système mécanique 5 et son agencement, ce système mécanique 5 comporte au moins un élément 6 à lubrifier et/ou à refroidir disposé dans un carter 8. En particulier, un tel élément 6 peut comprendre un engrenage comprenant au moins une roue dentée et un pignon en prise sur la roue dentée. Le carter 8 peut comprendre une pluralité de sous-ensembles qui délimitent conjointement une enceinte dans laquelle sont disposés le ou les éléments 6.

Pour lubrifier et/ou refroidir le ou les éléments 6 disposés à l'intérieur INT du système mécanique 5, l'assemblage 4 comporte un système fluidique 20.

Le système fluidique 20 comporte un réservoir 25 contenant un fluide de lubrification 26. Le réservoir 25 peut stocker le fluide de lubrification 26 au sein du carter 8. Par exemple, un sous-ensemble formant un fond du carter 8 forme au moins une partie du réservoir 25. Le fluide de lubrification 26 peut être un liquide de lubrification, tel qu'un liquide comprenant de l'huile, ou tout autre liquide apte à lubrifier et/ou à refroidir un élément 6 mécanique.

Pour projeter le fluide de lubrification 26 vers le ou les éléments 6 à lubrifier, le système fluidique 20 comprend un circuit d'aspersion 30. Le circuit d'aspersion 30 peut comprendre une ou plusieurs tuyauteries 31 débouchant sur au moins un moyen de projection du fluide de lubrification 26 dénommé « asperseur 33 ». Un tel asperseur 33 peut être par exemple un gicleur ou équivalent, un simple orifice d'un tuyau, un système mélangeant le fluide de lubrification 26 à un gaz...

De manière générale, le terme « tuyauterie » utilisé précédemment et par la suite peut représenter un unique tuyau ou une pluralité de tuyaux fixés les uns aux autres.

De plus, le circuit d'aspersion 30 peut comprendre une unité de filtration 32, agencée dans ou à l'extérieur du carter 8. Une telle unité de filtration 32 peut comporter un filtre voire un conduit de contournement. Par exemple, un filtre peut déboucher sur une tuyauterie 31 du circuit d'aspersion 30. En outre, un conduit de contournement, muni éventuellement d'un clapet antiretour, peut contourner le filtre.

Indépendamment des aspects précédents, le système fluidique 20 comporte deux circuits différents pour puiser le fluide de lubrification 26 dans le réservoir 25 et l'acheminer dans le circuit d'aspersion 30.

Le sens de déplacement du fluide de lubrification 26 est représenté par des flèches sur les figures.

Ainsi, le système fluidique 20 comprend un circuit fluidique principal 40 et un circuit fluidique de secours 60 qui sont chacun en communication fluidique avec le réservoir 25 et le circuit d'aspersion 30. Les expressions « principal » et « de secours » sont utilisées pour distinguer des organes respectivement du circuit fluidique principal 40 et du circuit fluidique de secours 60.

Par exemple, le circuit d'aspersion 30 comporte un tronçon de distribution 36 muni du ou des asperseurs 33. Ce tronçon de distribution 36 s'étend à l'intérieur INT du système mécanique 5 et à l'extérieur EXT du système mécanique 5. De plus, le circuit d'aspersion 30 peut par exemple comprendre un premier tronçon 34 liant hydrauliquement le tronçon de distribution 36 au circuit fluidique de secours 60 et un deuxième tronçon 35 liant hydrauliquement le tronçon de distribution 36 au circuit fluidique principal 40. Le premier tronçon 34 et/ou le deuxième tronçon 35 peuvent aussi s'étendre, par exemple mais non exclusivement, à l'extérieur EXT du système mécanique 5.

Selon un autre aspect, le circuit fluidique principal 40 peut être muni d'une pompe principale 41 qui présente une entrée d'aspiration principale 42 plongée dans des conditions normales dans le fluide de lubrification 26 présent dans le réservoir 25. Par exemple, la pompe principale 41 est pourvue d'une crépine principale d'aspiration qui délimite et/ou définit cette entrée d'aspiration principale 42. L'entrée d'aspiration principale 42 peut être séparée du fond 6 du réservoir par une première hauteur.

La pompe principale 41 aspire alors le fluide de lubrification 26 par son entrée d'aspiration principale 42 pour mettre en mouvement le fluide de lubrification 26 dans une liaison fluidique principale 46.

Ainsi, le circuit fluidique principal 40 comprend une liaison fluidique principale 46 munie d'au moins une tuyauterie.

Selon la variante, la liaison fluidique principale 46 peut déboucher directement sur le circuit d'aspersion 30 ou via au moins un échangeur thermique 45 et/ou au moins un clapet anti-retour principal 50, voire au moins un filtre.

En particulier, le circuit fluidique principal 40 peut comporter au moins un échangeur thermique 45, préférentiellement disposé à l'extérieur EXT du système mécanique 5. Un tel échangeur thermique 45 peut être un radiateur ou équivalent balayé par de l'air mis en mouvement par un ventilateur.

De manière additionnelle ou complémentaire, le circuit fluidique principal 40 peut comporter un clapet anti-retour principal 50. Le clapet anti-retour principal 50 est configuré pour pouvoir être dans un état fermé interdisant au fluide de lubrification 26 de le traverser et dans un état ouvert permettant la circulation du fluide de lubrification 26 au travers du clapet anti-retour principal 50 uniquement selon un sens de circulation allant du réservoir 25 vers le circuit d'aspersion 30. Selon un exemple donné pour illustration, le clapet anti-retour principal 50 comporte un passage principal 53 pouvant être obturé par un organe de blocage 51, tel qu'un piston ou une bille ou équivalent, cet organe de blocage 51 étant poussé vers le passage principal 53 par un dispositif de rappel élastique principal 52, tel qu'un ressort ou équivalent.

Au repos, le dispositif de rappel élastique principal 52 pousse l'organe de blocage 51 pour obturer le passage principal 53. Le clapet anti-retour principal 50 est dans un état fermé. Par contre, le dispositif de rappel élastique principal 52 est taré pour se comprimer sous la pression du fluide de lubrification 26 lorsque la pompe principale 41 est mise en mouvement, pour dégager le passage principal 53 et autoriser la circulation de fluide de lubrification. Le cas échéant, le clapet anti-retour principal 50 peut déboucher sur le deuxième tronçon 35 du circuit d'aspersion 30.

Le clapet anti-retour principal 50 peut par exemple être disposé à l'extérieur EXT du système mécanique 5, par exemple à des fins de maintenance, et/ou peut être situé en aval dudit au moins un échangeur thermique 45 le cas échéant.

Selon l'exemple illustré, la pompe principale 41 est donc en communication fluidique avec au moins un échangeur thermique 45 par la liaison fluidique principale 46. En outre, l'échangeur thermique 45 est en communication fluidique avec le clapet anti-retour principal 50 via une tuyauterie de liaison, le clapet anti-retour principal 50 débouchant sur le deuxième tronçon 35 du circuit d'aspersion 30.

Eventuellement, le circuit fluidique principal 40 comporte une liaison de détournement fluidique principale 43 pour mettre en communication fluidique la liaison fluidique principale 46 et le réservoir 5 en amont dudit échangeur thermique 45 dans des conditions particulières. Par exemple, la liaison de détournement fluidique principale 43 comporte une tuyauterie de détournement fixée à la liaison fluidique principale 46 et à un clapet de surpression principal 44. Ce clapet de surpression principal 44 s'ouvre à compter d'une pression seuil pour permettre au fluide de lubrification 26 de retourner dans le réservoir 25 en cas de colmatage de la liaison fluidique principale 46, de l'échangeur thermique 45 ou de blocage dans l'état fermé du clapet anti-retour principal 50.

Eventuellement, le circuit fluidique principal 40 peut au moins comporter une unité de filtration, par exemple du type décrit précédemment. Par exemple, une unité de filtration peut être interposée entre le ou les échangeurs thermiques 45 et la pompe principale 41.

Indépendamment de la manière de réaliser le circuit fluidique principal 40 et des autres aspects décrits précédemment, le système fluidique 20 comprend un circuit fluidique de secours 60. Ce circuit fluidique de secours 60 peut être muni d'une pompe de secours 61 ayant une entrée d'aspiration de secours 62.

Par exemple, la pompe de secours 61 est pourvue d'une crépine secondaire d'aspiration qui délimite et/ou définit cette entrée d'aspiration de secours 62. En outre, l'entrée d'aspiration de secours 62 peut être séparée du fond du réservoir par une seconde hauteur éventuellement inférieure à la première hauteur de l'entrée d'aspiration principale 42 de la pompe principale 41. Autrement dit, la pompe de secours 61 peut puiser le fluide de lubrification 26 dans le réservoir 25 plus profondément que la pompe principale 41.

Eventuellement, l'entrée d'aspiration de secours 62 repose sur le fond du réservoir 25.

La pompe de secours 61 aspire alors le fluide de lubrification 26 par cette entrée d'aspiration de secours 62 pour le diriger dans une liaison fluidique de secours 65.

Selon un autre aspect, la pompe principale 41 et la pompe de secours 61 sont par exemple en fonctionnement en même temps dans des conditions normales, à savoir hors panne. Par exemple, la pompe principale 41 et la pompe de secours 61 sont toutes deux mises en mouvement par une roue ou un pignon du système mécanique 5. Ainsi, lorsque le système mécanique 5 est en mouvement, la pompe principale 41 et la pompe de secours 61 sont aussi mises en mouvement.

Par ailleurs, le circuit fluidique de secours 60 comprend la liaison fluidique de secours 65 munie d'au moins une tuyauterie. La liaison fluidique de secours 65 débouche sur un clapet anti-retour de secours 70. Le cas échéant, le clapet anti-retour de secours 70 peut déboucher sur le premier tronçon 34 du circuit d'aspersion 30.

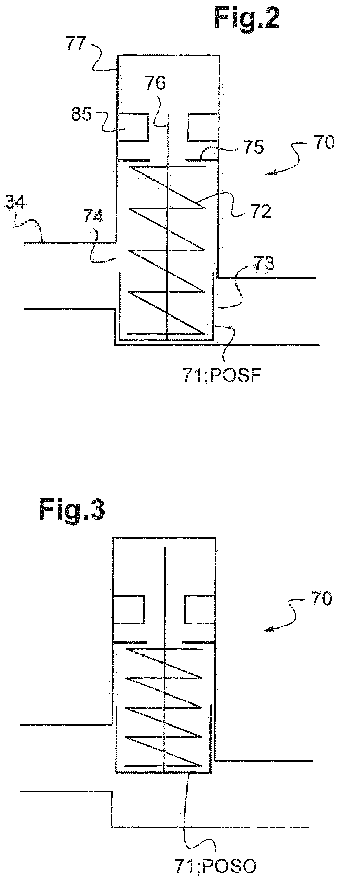

Selon l'exemple de la figure 2, le clapet anti-retour de secours 70 peut comporter un bloqueur 71 mobile pour autoriser ou empêcher la circulation du fluide de lubrification 26 au travers de ce clapet anti-retour de secours 70. Le clapet anti-retour de secours 70 peut par exemple être disposé à l'extérieur EXT du système mécanique 5, notamment à des fins de maintenance.

Par exemple, le clapet anti-retour de secours 70 peut comporter un tube 77 logeant le bloqueur 71. Le tube 77 est muni d'un passage de secours 73 relié à la pompe de secours 61, via la liaison fluidique de secours 65. De plus, le tube 77 est muni d'un passage de sortie 74 débouchant sur le circuit d'aspersion 30, et plus précisément sur le premier tronçon 34 selon l'exemple. Le bloqueur 71 peut obturer au moins un des passages de secours 73 et de sortie 74 dans la position fermée POSF illustrée sur la figure 2. A cet effet, le bloqueur 71 peut comprendre au moins une paroi apte à obturer le passage concerné.

De plus, le bloqueur 71 peut être poussé vers le passage à obturer de secours 73, et donc vers la position fermée, par un dispositif de rappel élastique de secours 72, tel qu'un ressort ou équivalent. Un tel dispositif de rappel élastique de secours 72 peut s'étendre selon une direction du bloqueur 71 jusqu'à un siège 75 du tube 77.

Par ailleurs, le bloqueur 71 peut être solidaire d'une tige de mesure 76, qui traverse le siège 75 selon l'exemple illustré.

Par ailleurs, un senseur d'état de secours 85 est configuré pour émettre vers un signal, analogique ou numérique, porteur d'une position du bloqueur 71 au sein du clapet anti-retour de secours 70 via une liaison filaire ou non filaire.. Le senseur d'état de secours 85 est configuré pour émettre un signal d'état de secours qui varie en fonction de la position du bloqueur 71 au sein du clapet anti-retour de secours 70. Par exemple et à titre illustratif, le senseur d'état de secours 85 comporte un senseur de position usuel. Par exemple, le senseur d'état de secours coopère avec la tige de mesure 76, et émet un signal variant avec la position de avec la tige de mesure 76.

Au repos, le dispositif de rappel élastique de secours 72 pousse le bloqueur 71 pour obturer le passage de secours 73 ou le passage de sortie 74. Par contre, le dispositif de rappel élastique de secours 72 est taré pour se comprimer sous la pression du fluide de lubrification 26 lorsque la pompe de secours 61 est en fonctionnement alors que le circuit fluidique principal 40 est inopérant.

En outre, le dispositif de rappel élastique de secours 72 éventuel, le circuit fluidique principal 40 et le circuit fluidique de secours 60 sont dimensionnés pour que le bloqueur 71 soit dans la position fermée POSF dans un mode de fonctionnement nominal. Durant le mode fonctionnement nominal, le système fluidique 20 est dimensionné pour que le clapet anti-retour de secours 70 soit fermé sous l'effet du dispositif de rappel élastique de secours 72 et de la pression du fluide de lubrification 26 à la sortie de ce clapet anti-retour de secours 70, la sortie étant à considérer selon un sens allant du réservoir 25 vers le circuit d'aspersion 30.

En référence à la figure 3, le bloqueur 71 peut, dans un autre mode de fonctionnement, atteindre une position ouverte POSO. Le fluide de lubrification 26 acheminé par la pompe de secours 61 traverse alors le clapet anti-retour de secours 70 pour rejoindre le circuit d'aspersion 30.

Le circuit fluidique de secours 60 peut aussi comprendre une unité de filtration entre la pompe de secours 61 et le clapet anti-retour de secours 70.

Eventuellement, le circuit fluidique de secours 60 comporte une liaison de détournement fluidique de secours 63 pour mettre en communication fluidique le circuit fluidique de secours 60 et le réservoir 25 en amont du clapet anti-retour de secours 70 dans des conditions particulières. Par exemple, la liaison de détournement fluidique de secours 63 comporte une tuyauterie de détournement fixée à la liaison fluidique de secours 65 et à un clapet de surpression de secours 64. Ce clapet de surpression de secours 64 s'ouvre à compter d'une pression seuil pour permettre au fluide de lubrification 26 de retourner dans le réservoir 25 en cas de colmatage de la liaison fluidique de secours 65 ou de blocage dans l'état fermé du clapet anti-retour de secours 70.

Par ailleurs, le système fluidique 20 comporte un système de surveillance.

Le système de surveillance comprend un alerteur 90 apte à générer une première alerte, une deuxième alerte et une troisième alerte différentes. Chaque alerte peut prendre la forme d'une alarme visuelle, par exemple par le biais de l'émission d'une lumière avec une diode électroluminescente ou un équivalent ou de l'affichage sur un écran d'un ou plusieurs caractères, d'une alarme sonore, par le biais d'un haut-parleur, et/ou d'une alarme haptique, par exemple à l'aide d'une unité vibrante faisant vibrer un organe tenu ou porté par un individu.

Pour déterminer si une alerte doit être émise, l'alerteur 90 peut comprendre par exemple un calculateur ayant au moins un processeur et au moins une mémoire, au moins un circuit intégré, au moins un système programmable, au moins un circuit logique, au moins un circuit électrique ces exemples ne limitant pas la portée donnée à l'expression « alerteur ». Le terme processeur peut désigner aussi bien une unité centrale de traitement connue sous l'acronyme CPU, une unité graphique de traitement GPU, une unité digitale connue sous l'acronyme DSP, un microcontrôleur...

De plus, l'alerteur 90 reçoit le signal émis par le senseur d'état de secours 85.

Le système de surveillance comprend aussi au moins un senseur de dysfonctionnement 80 pour détecter un dysfonctionnement éventuel du circuit fluidique principal 40. Ce senseur de dysfonctionnement 80 peut comporter un ou plusieurs capteurs émettant chacun un signal de dysfonctionnement analogique ou numérique vers l'alerteur 90.

Par exemple, un senseur de dysfonctionnement 80 comporte un capteur de pression 81 émettant un signal de pression, analogique ou numérique, variant en fonction d'une pression régnant dans ledit circuit d'aspersion 30, et notamment du fluide de lubrification 26 dans le circuit d'aspersion 30 en l'absence d'une fuite. Eventuellement, le capteur de pression 81 est disposé au bout du circuit d'aspersion 30.

De manière complémentaire ou alternative, en présence d'un clapet anti-retour principal 50, un senseur de dysfonctionnement 80 peut comporter un senseur d'état principal 82 transmettant un signal d'état principal à l'alerteur 90 via une liaison filaire ou non filaire. Le senseur d'état principal 82 est configuré pour émettre un signal d'état principal qui varie lorsque le clapet anti-retour principal 50 passe de l'état ouvert à l'état fermé et inversement. Le senseur d'état principal 82 détermine si le clapet anti-retour principal 50 est ouvert ou fermé, favorablement par une mesure qui n'est pas une mesure de pression du fluide de lubrification 26.

Par exemple et à titre illustratif, le senseur d'état principal 82 comporte un capteur de fin de course pressé le cas échéant par l'organe de blocage 51 lorsque cet organe de blocage 51 obture le passage principal 53. Tout type de capteur permettant d'établir l'état du clapet anti-retour principal 50 peut être utilisé, et en particulier un capteur de position mesurant la position de l'organe de blocage 51 le cas échéant.

Selon un autre aspect, le système fluidique 20 peut comporter un senseur de fonctionnement 95 pour détecter si le système mécanique 5 est en fonctionnement. Par exemple, le senseur de fonctionnement 95 comporte un capteur de vitesse émettant un signal de fonctionnement, analogique ou numérique, variant en fonction d'une vitesse de déplacement d'un élément 6 du système mécanique 5. Ce signal de fonctionnement est transmis à l'alerteur 90 via une liaison filaire ou non filaire.

L'alerteur 90 est configuré pour appliquer le procédé selon l'invention en fonction des signaux reçus.

La figure 4 illustre ce procédé. Ce procédé comporte une phase de surveillance STPB mise en œuvre par l'alerteur 90 pour signaler à un individu si le système fluidique 20 est défaillant et le cas échéant pour évaluer l'impact de la défaillance.

Eventuellement, le procédé comporte préalablement une étape STPA de détection que le système mécanique 5 est en fonctionnement. Selon cette variante, l'alerteur 90 met en œuvre la phase de surveillance STPB seulement lorsque le système mécanique 5 est en fonctionnement.

Indépendamment de cette possibilité, la phase de surveillance STPB comporte une étape d'identification STPB1 du mode de fonctionnement courant du système fluidique 20.

Cette étape d'identification STPB1 comporte une étape de détection d'un dysfonctionnement STPB11 durant laquelle un dysfonctionnement rendant inopérant ledit circuit fluidique principal 40 est détecté par l'alerteur 90, par le biais de la surveillance d'au moins un paramètre de surveillance avec le senseur de dysfonctionnement 80.

Selon un exemple, un paramètre de surveillance prend la forme d'une pression régnant dans le circuit d'aspersion 30 mesurée avec un capteur de pression 81. Dès lors, ladite détection d'un dysfonctionnement par surveillance d'au moins un paramètre de surveillance comporte une étape de détection que ladite pression est inférieure à un seuil de pression prédéterminé. Dès lors, l'alerteur 90 détecte un tel dysfonctionnement lorsque le signal de pression transmis par le capteur de pression 81 est porteur d'une pression inférieure à un seuil de pression mémorisée dans cet alerteur 90.

Selon un exemple, un paramètre de surveillance est porteur de l'état ouvert ou fermé du clapet anti-retour principal 50. La détection d'un dysfonctionnement par surveillance d'au moins un paramètre de surveillance comporte une étape de détection que ledit clapet anti-retour principal 50 est dans un état différent de l'état fermé. Dès lors, l'alerteur 90 détecte un tel dysfonctionnement lorsque le signal d'état principal transmis par le senseur d'état principal 82 est porteur d'un état fermé du clapet anti-retour principal 50.

L'étape d'identification STPB1 comporte aussi une étape de mesure STPB12 de la position du bloqueur 71 du clapet anti-retour de secours 70. A partir du signal émis par le senseur d'état de secours 85, l'alerteur 90 détermine si le bloqueur 71 est stable dans la position fermée, stable dans la position ouverte, ou si le bloqueur 71 bagotte, à savoir si le bloqueur 71 ne reste pas dans une position stable.

Par exemple, l'alerteur 90 est configuré pour considérer que le bloqueur 71 est stable dans la position ouverte lorsque le bloqueur 71 est dans la position ouverte depuis une durée supérieure ou égale à une durée d'ouverture prédéterminée. Par exemple, l'alerteur 90 est configuré pour considérer que le bloqueur 71 est stable dans la position fermée lorsque le bloqueur 71 est dans la position fermée depuis une durée supérieure ou égale à une durée de fermeture prédéterminée. Dans les autres cas, l'alerteur 90 est configuré pour considérer que le bloqueur 71 bagotte, par exemple entre la position ouverte et la position fermée.

Cette étape de mesure STPB12 et l'étape de détection d'un dysfonctionnement STPB11 peuvent être réalisées en même temps ou l'une après l'autre. Par exemple, l'étape de mesure STPB12 peut être réalisée uniquement si un dysfonctionnement a été détecté.

Par ailleurs, la phase de surveillance STPB comporte une étape d'alerte STPB2 mise en œuvre lorsque le système fluidique 20 est inopérant ou fonctionne selon un mode de fonctionnement dégradé.

Ainsi, l'étape d'alerte STPB2 comporte une étape de génération STPB21 d'une première alerte tant qu'un dysfonctionnement est détecté et que le bloqueur 71 est stable dans la position ouverte, et donc lorsque le système fluidique 20 fonctionne selon un mode de fonctionnement dégradé.

Par contre, si le bloqueur 71 est stable dans la position fermée tant qu'un dysfonctionnement est détecté, et donc lorsque le système fluidique 20 est inopérant, alors la phase de surveillance STPB comporte une étape de génération STPB22 d'une deuxième alerte différente de la première alerte.

Lorsque le bloqueur 71 bagotte et tant qu'un dysfonctionnement est détecté alors la phase de surveillance STPB comporte une étape de génération STPB23 d'une troisième alerte différente de la première alerte et de la deuxième alerte.

Lorsque le système mécanique 5 est agencé au sein d'un aéronef 2, ladite première alerte peut être porteuse d'une autorisation de vol pendant une première durée, par exemple illimitée, et/ou d'une autorisation de vol dans des conditions de vol normales. La deuxième alerte peut être porteuse d'une autorisation de vol pendant une deuxième durée inférieure à la première durée et/ou d'une autorisation de vol pour poser immédiatement l'aéronef, à savoir dans un délai limité. Ladite troisième alerte peut être porteuse d'une autorisation de vol pendant au moins la première durée, et/ou d'une autorisation de vol en appliquant des consignes prédéterminées pour voler dans des conditions de charge réduite et/ou d'un ordre d'atterrissage sur une aire d'atterrissage praticable dès que possible. Par exemple, la première alerte, la deuxième alerte et la troisième alerte peuvent être porteuse d'autorisations de vol respectivement de 30 minutes, 15 minutes, et d'aucune limite, l'alerteur 90 pouvant afficher la durée adéquate.

Eventuellement, l'alerteur 90 ou un autre organe dédié peut effectuer une ou plusieurs des mesures suivantes : mesure d'une durée entre le passage du bloqueur de la position ouverte POSO à la position fermée POSF, mesure d'une durée entre le passage du bloqueur de la position fermée POSF à la position ouverte POSO, mesure d'une durée entre le passage du bloqueur 71 de la position ouverte POSO à la position fermée POSF puis à la position ouverte POSO, mesure d'une amplitude de déplacement du bloqueur 71.

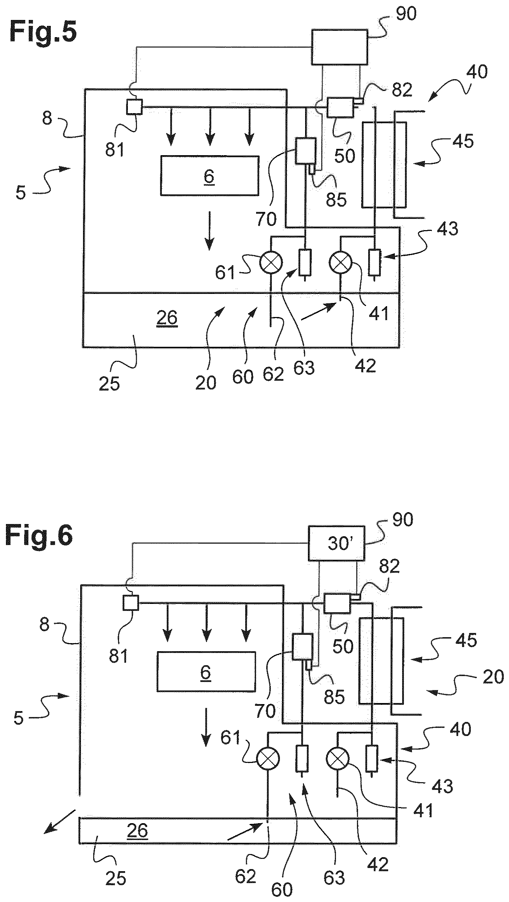

Les figures 5 à 8 illustrent des exemples de fonctionnement de l'invention.

La figure 5 présente le système fluidique 20 dans un mode fonctionnement nominal. Le circuit fluidique principal 40 puise le fluide de lubrification 26 dans le réservoir 25 et l'achemine dans le circuit d'aspersion 30. Le clapet anti-retour de secours 70 est dans son état fermé. Le bloqueur 71 interdit la circulation de fluide de lubrification 26 à travers le clapet anti-retour de secours 70. Par exemple, le capteur de pression 81 transmet à l'alerteur 90 un signal de pression porteur d'une pression sensiblement équivalente à la pression du fluide de lubrification 26 dans le circuit fluidique principal 40. L'alerteur 90 en déduit que le système fluidique 20 fonctionne normalement et aucune alerte n'est émise.

Selon la figure 6, le système fluidique 20 présente une fuite qualifiée de gravitaire par commodité empêchant un retour de la totalité du fluide de lubrification 26 dans le réservoir 25. Le niveau du fluide de lubrification 26 baisse dans le réservoir 25. Lorsque ce niveau passe sous l'entrée d'aspiration principale 42 du circuit fluidique principal 40, le fluide de lubrification 26 n'est plus en circulation au sein du circuit fluidique principal 40. Le clapet anti-retour principal 50 passe dans l'état fermé. A l'inverse, le clapet anti-retour de secours 70 doit s'ouvrir et alimente le circuit d'aspersion 30. Le changement d'état du clapet anti-retour principal 50 et/ou la mesure réalisée par le capteur de pression 81 permettent à l'alerteur 90 de détecter un dysfonctionnement durant l'étape STPB précitée. Le clapet anti-retour de secours 70 étant ouvert, suite à la réception d'un signal d'état de secours émis par le senseur d'état de secours 85 porteur de cet état ouvert du clapet anti-retour de secours 70, l'alerteur 90 émet la première alerte, par exemple synonyme d'une autorisation de vol de trente minutes à compter de cet instant.

Si le niveau du fluide de lubrification 26 dans le réservoir 25 passe sous l'entrée d'aspiration de secours 62 du circuit fluidique de secours 60, le fluide de lubrification 26 n'est plus en circulation aussi au sein du circuit fluidique de secours 60. Le bloqueur 71 passe dans la position fermée POSF. Suite à la réception d'un signal d'état de secours émis par le senseur d'état de secours 85 porteur de cet état fermé du clapet anti-retour de secours 70, l'alerteur 90 émet la deuxième alerte, par exemple synonyme d'une autorisation de vol de quinze minutes à compter de cet instant puisque les éléments 6 du système mécanique 5 ne sont plus lubrifiés. Eventuellement, avant de rester stable dans la position fermée POSF, le bloqueur 71 peut cependant bagotter durant une période transitoire. La troisième alerte est alors émise, avant la deuxième alerte précitée.

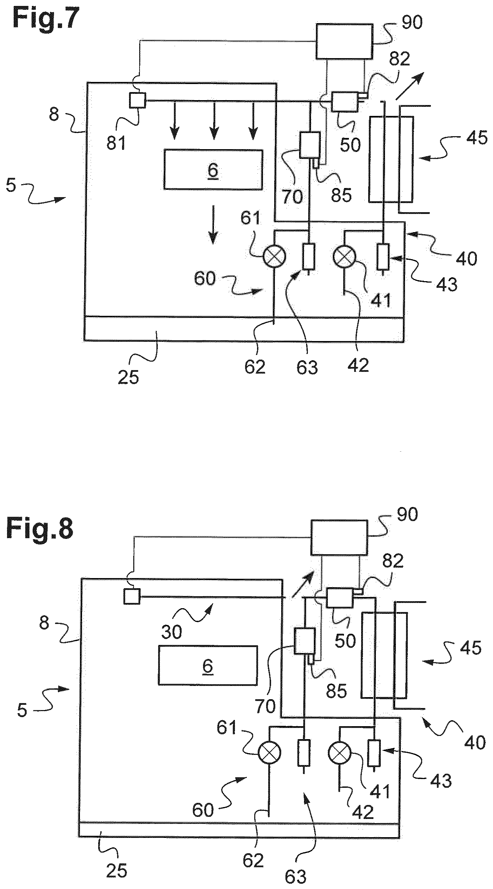

Selon la figure 7, le système fluidique 20 présente une fuite au niveau du circuit fluidique principal 40 et en dehors du système mécanique 5. Le niveau du fluide de lubrification 26 baisse dans le réservoir 25. Le fonctionnement décrit précédemment s'applique aussi dans ce cas. Par contre, le temps passé dans chaque période, et/ou l'amplitude déplacement du bloqueur 71 peut fournir une information supplémentaire à un pilote.

Selon la figure 8, le système fluidique 20 présente une fuite au niveau du circuit d'aspersion 30. Dès lors, le clapet anti-retour de secours 70 va s'ouvrir.

En présence d'un paramètre de surveillance de type pression mesurée par le capteur de pression 81, l'alerteur 90 émet alors la première alerte. En présence d'un paramètre de surveillance de type porteur de l'état ouvert ou fermé du clapet anti-retour principal 50, la première alerte est émise lorsque le niveau de fluide de lubrification 26 dans le réservoir 25 passe sous l'entrée d'aspiration principale 42 du circuit fluidique principal 40.

Lorsque le niveau du fluide de lubrification 26 dans le réservoir 25 passe sous l'entrée d'aspiration de secours 62 du circuit fluidique de secours 60, le fluide de lubrification 26 n'est plus en circulation aussi au sein du circuit fluidique de secours 60. Le clapet anti-retour de secours 70 passe dans l'état fermé. L'alerteur 90 émet la deuxième alerte, par exemple synonyme d'une autorisation de vol de quinze minutes à compter de cet instant puisque les éléments 6 du système mécanique ne sont plus lubrifiés via le circuit d'aspersion 30. Eventuellement, avant de rester stable dans la position fermée POSF, le bloqueur 71 peut cependant bagotter durant une période transitoire. La troisième alerte est alors émise, avant la deuxième alerte précitée.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre des revendications.

## Revendications

1. Procédé de surveillance d'un système fluidique (20) de lubrification d'un système mécanique (5), ledit système fluidique (20) comprenant un réservoir (25) contenant un fluide de lubrification (26), ledit système fluidique (20) comprenant un circuit d'aspersion (30) muni d'au moins un asperseur (33), ledit système fluidique (20) comprenant un circuit fluidique principal (40) s'étendant du réservoir (25) jusqu'au circuit d'aspersion (30), ledit système fluidique (20) comprenant un circuit fluidique de secours (60) s'étendant à partir du réservoir (25) et rejoignant ledit circuit d'aspersion (30), ledit circuit fluidique de secours (60) comporte un clapet anti-retour de secours (70) muni d'un bloqueur (71) mobile d'une position fermée (POSF) interdisant une circulation dudit fluide de lubrification (26) à une position ouverte (POSO) permettant un passage dudit fluide de lubrification (26) du réservoir (25) vers le circuit d'aspersion (30), ledit circuit fluidique de secours (60) étant dimensionné pour que le clapet anti-retour de secours (70) soit dans l'état fermé dans un mode de fonctionnement nominal, le procédé comportant une phase de surveillance (STPB) comprenant les étapes suivantes :
- détection d'un dysfonctionnement (STPB11) par surveillance d'au moins un paramètre de surveillance, ledit dysfonctionnement rendant inopérant ledit circuit fluidique principal (40),
- mesure (STPB12) d'une position du bloqueur (71) au sein du clapet anti-retour de secours (70),
- génération (STPB21) d'une première alerte en présence d'une dite détection d'un dysfonctionnement et d'une détection que le bloqueur (71) est stable dans la position ouverte, le bloqueur (71) étant stable dans la position ouverte lorsque le bloqueur (71) est dans la position ouverte au minimum pendant une durée d'ouverture prédéterminée,
- génération (STPB22) d'une deuxième alerte différente de la première alerte en présence d'une dite détection d'un dysfonctionnement et d'une détection que le bloqueur (71) est stable dans la position fermée, le bloqueur (71) étant stable dans la position fermée lorsque le bloqueur (71) est dans la position fermée au minimum pendant une durée de fermeture prédéterminée
**caractérisé en ce que** la phase de surveillance (STPB) comprend l'étape suivante:
- génération (STPB23) d'une troisième alerte différente de la première alerte et de la deuxième alerte en présence d'une dite détection d'un dysfonctionnement et d'une détection que le bloqueur (71) est dans une phase transitoire pendant laquelle le bloqueur (71) bagotte.

2. Procédé selon la revendication 1,
**caractérisé en ce que** ledit au moins un paramètre de surveillance est une pression régnant dans ledit circuit d'aspersion (30), ladite détection d'un dysfonctionnement par surveillance d'au moins un paramètre de surveillance comportant une étape de détection que ladite pression est inférieure à un seuil de pression prédéterminé avec un capteur de pression (81).

3. Procédé selon la revendication 1,
**caractérisé en ce que** ledit circuit fluidique principal (40) comporte un clapet anti-retour principal (50) configuré pour être soit dans un état fermé soit dans un état ouvert permettant un passage dudit fluide de lubrification (26) du réservoir (25) vers le circuit d'aspersion (30), ledit au moins un paramètre de surveillance étant porteur de l'état ouvert ou fermé du clapet anti-retour principal (50), ladite détection d'un dysfonctionnement par surveillance d'au moins un paramètre de surveillance comportant une étape de détection que ledit clapet anti-retour principal (50) est dans un état différent de l'état ouvert.

4. Procédé selon l'une quelconque des revendications 1 à 3,
**caractérisé en ce que** ledit procédé comporte une étape de détection (STPA) que le système mécanique (5) est en fonctionnement, ladite phase de surveillance (STPB) étant mise en œuvre lorsque le système mécanique (5) est en fonctionnement.

5. Procédé selon l'une quelconque des revendications 1 à 4,
**caractérisé en ce que** ledit système mécanique (5) est agencé au sein d'un aéronef (2), ladite première alerte est porteuse d'une autorisation de vol pendant une première durée et la deuxième alerte est porteuse d'une autorisation de vol pendant une deuxième durée inférieure à la première durée, ladite troisième alerte étant porteuse d'une autorisation de vol pendant au moins la première durée.

6. Procédé selon l'une quelconque des revendications 1 à 5,
**caractérisé en ce que** le procédé comporte durant la phase transitoire au moins une des mesures suivantes : mesure d'une durée entre un passage du bloqueur de la position ouverte à la position fermée, mesure d'une durée entre un passage du bloqueur de la position fermée à la position ouverte, mesure d'une durée entre un passage du bloqueur la position ouverte à la position fermée puis à la position ouverte, mesure d'une amplitude de déplacement du bloqueur.

7. Système fluidique (20) comprenant un réservoir (25) contenant un fluide de lubrification (26), ledit système fluidique (20) comprenant un circuit d'aspersion (30) muni d'au moins un asperseur (33), ledit système fluidique (20) comprenant un circuit fluidique principal (40) s'étendant du réservoir jusqu'au circuit d'aspersion (30), ledit système fluidique (20) comprenant un circuit fluidique de secours (60) s'étendant à partir du réservoir (25) et rejoignant ledit circuit d'aspersion (30), ledit circuit fluidique de secours (60) comporte un clapet anti-retour de secours (70) muni d'un bloqueur (71) mobile d'une position fermée interdisant une circulation dudit fluide de lubrification (26) à une position ouverte permettant un passage dudit fluide de lubrification (26) du réservoir (25) vers le circuit d'aspersion (30), ledit système fluidique (20) comprenant au moins un senseur de dysfonctionnement (80) pour effectuer ladite détection d'un dysfonctionnement de la revendication 1, ledit système fluidique (20) ayant un senseur de position (85) configuré pour mesurer une position du bloqueur (71), le système fluidique (20) ayant un alerteur (90) en communication avec le senseur d'état de secours (85) et le senseur de dysfonctionnement (80),
**caractérisé en ce que** ledit système fluidique (20) est configuré pour appliquer le procédé selon l'une quelconque des revendications 1 à 6, ledit alerteur (90) est configuré pour effectuer ladite génération de la première alerte et ladite génération de la deuxième alerte et ladite génération de la troisième alerte.

8. Système fluidique (20) selon la revendication 7,
**caractérisé en ce que** ledit senseur de dysfonctionnement (80) comporte un capteur de pression (81) émettant un signal de pression variant en fonction d'une pression régnant dans ledit circuit d'aspersion (30), ledit signal de pression étant transmis à l'alerteur (90).

9. Système fluidique (20) selon l'une quelconque des revendications 7 à 8,
**caractérisé en ce que** ledit circuit fluidique principal (40) comporte un clapet anti-retour principal (50) configuré pour être soit dans un état fermé soit dans un état ouvert permettant un passage dudit fluide de lubrification (26) du réservoir (25) vers le circuit d'aspersion (30), ledit senseur de dysfonctionnement (80) comportant un senseur d'état principal (82) configuré pour effectuer la détection que le clapet anti-retour principal (50) est dans ledit état ouvert ou ledit état fermé.

10. Système fluidique (20) selon l'une quelconque des revendications 7 à 9,
**caractérisé en ce que** ledit système fluidique (20) comporte un senseur de fonctionnement (95) pour détecter si le système mécanique (5) est en fonctionnement.

11. Assemblage (4) muni d'un système mécanique (5) ayant au moins un élément (6) à lubrifier et un système fluidique (20) pour lubrifier ledit au moins un élément (6) à lubrifier,
**caractérisé en ce que** ledit système fluidique (20) est selon l'une quelconque des revendications 7 à 10.

12. Assemblage selon la revendication 11,
**caractérisé en ce que** ledit clapet anti-retour de secours (70) débouche sur le circuit d'aspersion (30).

13. Véhicule (1) comprenant un assemblage (4),
**caractérisé en ce que** ledit assemblage (4) est selon l'une quelconque des revendications 11 à 12.

## Patentansprüche

1. Verfahren zum Überwachen eines Fluidsystems (20) zum Schmieren eines mechanischen Systems (5), wobei das Fluidsystem (20) einen Behälter (25) umfasst, der ein Schmierfluid (26) enthält, wobei das Fluidsystem (20) einen Sprühkreis (30) mit mindestens einem Sprühkopf (33) umfasst, wobei das Fluidsystem (20) einen Hauptfluidkreis (40) umfasst, der sich vom Vorratsbehälter (25) bis zum Sprühkreis (30) erstreckt, wobei das Fluidsystem (20) einen Notfluidkreis (60) umfasst, der sich vom Behälter (25) erstreckt und den Sprühkreis (30) erreicht, wobei der Notfluidkreis (60) ein Notrückschlagventil (70) mit einer Sperre (71) aufweist, die aus einer geschlossenen Position (POSF), in der sie einen Durchfluss des Schmierfluids (26) verhindert, in eine offene Position (POSO) bewegbar ist, in der sie einen Durchfluss des Schmierfluids (26) vom Behälter (25) zum Sprühkreislauf (30) ermöglicht, wobei der Notfluidkreis (60) so dimensioniert ist, dass sich das Notrückschlagventil (70) in einem Nennbetriebsmodus im geschlossenen Zustand befindet, wobei das Verfahren eine Überwachungsphase (STPB) umfasst, die die folgenden Schritte umfasst:
- Erfassen einer Störung (STPB11) durch Überwachen mindestens eines Überwachungsparameters, wobei die Störung den Hauptfluidkreis (40) außer Betrieb setzt,
- Messen (STPB12) einer Position der Sperre (71) innerhalb des Notrückschlagventils (70),
- Erzeugen (STPB21) einer ersten Warnung bei Vorliegen einer besagten Erfassung einer Störung und einer Erfassung, dass die Sperre (71) in der offenen Position stabil ist, wobei die Sperre (71) dann in der offenen Position stabil ist, wenn sich die Sperre (71) mindestens während einer vorgegebenen Öffnungsdauer in der offenen Position befindet,
- Erzeugen (STPB22) einer zweiten Warnung, die sich von der ersten Warnung unterscheidet, bei Vorliegen einer besagten Erfassung einer Störung und einer Erfassung, dass die Sperre (71) in der geschlossenen Position stabil ist, wobei die Sperre (71) dann in der geschlossenen Position stabil ist, wenn sich die Sperre (71) mindestens während einer vorgegebenen Schließdauer in der geschlossenen Position befindet,
**dadurch gekennzeichnet, dass** die Überwachungsphase (STPB) den folgenden Schritt umfasst:
- Erzeugen (STPB23) einer dritten, von der ersten Warnung und der zweiten Warnung verschiedenen Warnung bei Vorliegen einer besagten Erfassung einer Störung und einer Erfassung, dass sich die Sperre (71) in einer Übergangsphase befindet, in der die Sperre (71) wackelt.

2. Verfahren nach Anspruch 1,
**dadurch gekennzeichnet, dass** der mindestens eine Überwachungsparameter ein in dem Sprühkreis (30) herrschender Druck ist, wobei die Erfassung einer Störung durch Überwachen mindestens eines Überwachungsparameters einen Schritt umfasst, bei dem mit einem Drucksensor (81) erfasst wird, dass der Druck unter einem vorgegebenen Druckschwellenwert liegt.

3. Verfahren nach Anspruch 1,
**dadurch gekennzeichnet, dass** der Hauptfluidkreis (40) ein Hauptrückschlagventil (50) umfasst, das konfiguriert ist, um entweder einen geschlossenen Zustand oder einen offenen Zustand einzunehmen, der einen Durchfluss des Schmierfluids (26) vom Vorratsbehälter (25) zum Sprühkreis (30) ermöglicht,
wobei der mindestens eine Überwachungsparameter den offenen oder geschlossenen Zustand des Hauptrückschlagventils (50) angibt,
wobei die Erfassung einer Störung durch Überwachen mindestens eines Überwachungsparameters einen Schritt umfasst, bei dem erkannt wird, dass sich das Hauptrückschlagventil (50) in einem anderen Zustand als dem offenen Zustand befindet.

4. Verfahren nach einem der Ansprüche 1 bis 3,
**dadurch gekennzeichnet, dass** das Verfahren einen Schritt des Erfassens (STPA) umfasst, dass das mechanische System (5) in Betrieb ist, wobei die Überwachungsphase (STPB) durchgeführt wird, wenn das mechanische System (5) in Betrieb ist.

5. Verfahren nach einem der Ansprüche 1 bis 4,
**dadurch gekennzeichnet, dass** das mechanische System (5) in einem Luftfahrzeug (2) angeordnet ist, wobei die erste Warnung eine Flugfreigabe für eine erste Dauer enthält und die zweite Warnung eine Flugfreigabe für eine zweite Dauer enthält, die kürzer ist als die erste Dauer, und die dritte Warnung eine Flugfreigabe für mindestens die erste Dauer enthält.

6. Verfahren nach einem der Ansprüche 1 bis 5,
**dadurch gekennzeichnet, dass** das Verfahren während der Übergangsphase mindestens eine der folgenden Messungen umfasst: Messen einer Zeitdauer zwischen einem Übergang der Sperre von der offenen Position in die geschlossene Position, Messen einer Zeitdauer zwischen einem Übergang der Sperre von der geschlossenen Position in die offene Position, Messen einer Zeitdauer zwischen einem Übergang der Sperre von der offenen Position in die geschlossene Position und anschließend in die offene Position, Messen einer Bewegungsamplitude der Sperre.

7. Fluidsystem (20) mit einem Behälter (25), der ein Schmierfluid (26) enthält, wobei das Fluidsystem (20) einen Sprühkreis (30) mit mindestens einem Sprühkopf (33) umfasst, wobei das Fluidsystem (20) einen Hauptfluidkreis (40) umfasst, der sich vom Behälter bis zum Sprühkreis (30) erstreckt, wobei das Fluidsystem (20) einen Notfluidkreis (60) umfasst, der sich vom Behälter (25) aus erstreckt und den Sprühkreis (30) erreicht, wobei der Notfluidkreis (60) ein Notrückschlagventil (70) mit einer Sperre (71) aufweist, die aus einer geschlossenen Position, in der sie einen Durchfluss des Schmierfluids (26) verhindert, in eine offene Position bewegbar ist, in der sie einen Durchfluss des Schmierfluids (26) aus dem Behälter (25) zum Sprühkreislauf (30) ermöglicht, wobei das Fluidsystem (20) mindestens einen Störungssensor (80) umfasst, um die Erfassung einer Störung nach Anspruch 1 durchzuführen, wobei das Fluidsystem (20) einen Positionssensor (85) aufweist, der konfiguriert ist, um eine Position der Sperre (71) zu messen, und das Fluidsystem (20) eine Warnvorrichtung (90) aufweist, die mit dem Notfallzustandssensor (85) und dem Funktionsstörungssensor (80) kommuniziert,
**dadurch gekennzeichnet, dass** das Fluidsystem (20) konfiguriert ist, um das Verfahren nach einem der Ansprüche 1 bis 6 durchzuführen, und die Warnvorrichtung (90) konfiguriert ist, um die Erzeugung der ersten Warnung und die Erzeugung der zweiten Warnung und die Erzeugung der dritten Warnung durchzuführen.

8. Fluidsystem (20) nach Anspruch 7,
**dadurch gekennzeichnet, dass** der Störungssensor (80) einen Drucksensor (81) umfasst, der ein Drucksignal ausgibt, das in Abhängigkeit von einem in dem Sprühkreis (30) herrschenden Druck variiert, wobei das Drucksignal an die Warnvorrichtung (90) übertragen wird.

9. Fluidsystem (20) nach einem der Ansprüche 7 bis 8,
**dadurch gekennzeichnet, dass** der Hauptfluidkreis (40) ein Hauptrückschlagventil (50) aufweist, das konfiguriert ist, um entweder in einem geschlossenen Zustand oder in einem offenen Zustand zu sein, der einen Durchfluss des Schmierfluids (26) vom Behälter (25) zum Sprühkreis (30) ermöglicht, wobei der Störungssensor (80) einen Hauptzustandssensor (82) umfasst, der konfiguriert ist, um zu erfassen, ob sich das Hauptrückschlagventil (50) in dem offenen Zustand oder dem geschlossenen Zustand befindet.

10. Fluidsystem (20) nach einem der Ansprüche 7 bis 9,
**dadurch gekennzeichnet, dass** das Fluidsystem (20) einen Funktionssensor (95) aufweist, um zu erfassen, ob das mechanische System (5) in Betrieb ist.

11. Baugruppe (4) mit einem mechanischen System (5), das mindestens ein zu schmierendes Element (6) und ein Fluidsystem (20) zum Schmieren des mindestens einen zu schmierenden Elements (6) umfasst,
**dadurch gekennzeichnet, dass** das Fluidsystem (20) gemäß einem der Ansprüche 7 bis 10 ausgebildet ist.

12. Baugruppe nach Anspruch 11,
**dadurch gekennzeichnet, dass** das Notrückschlagventil (70) in den Sprühkreis (30) mündet.

13. Verkehrsmittel (1) mit einer Baugruppe (4), **dadurch gekennzeichnet, dass** die Baugruppe (4) nach einem der Ansprüche 11 bis 12 ausgebildet ist.

## Claims

1. Method for monitoring a fluid system (20) lubricating a mechanical system (5), said fluid system (20) including a reservoir (25) containing a lubrication fluid (26), said fluid system (20) including a spray system (30) provided with at least one sprayer (33), said fluid system (20) including a main fluid circuit (40) extending from the reservoir (25) to the spray system (30), said fluid system (20) including an emergency fluid circuit (60) extending from the reservoir (25) and joining said spray system (30), said emergency fluid circuit (60) comprises an emergency check valve (70) provided with a blocker (71) moveable from a closed position (POSF) preventing any circulation of said lubrication fluid (26) to an open position (POSO) allowing said lubrication fluid (26) to pass from the reservoir (25) to the spray system (30), said emergency fluid circuit (60) being dimensioned so that the emergency check valve (70) is in the closed state in a nominal operating mode, the method comprising a monitoring phase (STPB) including the following steps:
- detecting (STPB11) any dysfunction by monitoring at least one monitoring parameter, said dysfunction making said main fluid circuit (40) inoperative,
- measuring (STPB12) a position of the blocker (71) inside the emergency check valve (70),
- generating (STPB21) a first warning in the event of said detection of a dysfunction and detecting that the blocker (71) is stable in the open position, the blocker (71) being stable in the open position when the blocker (71) is in the open position for at least a predetermined open period,
- generating (STPB22) a second warning different from the first warning in the event of said detection of a dysfunction and detecting that the blocker (71) is stable in the closed position, the blocker (71) being stable in the closed position when the blocker (71) is in the closed position for at least a predetermined closed period,
**characterised in that** the monitoring phase (STPB) includes the following step:
- generating (STPB23) a third warning different from the first warning and the second warning in the event of said detection of a dysfunction and detecting that the blocker (71) is in a transition phase during which the blocker (71) oscillates.

2. Method according to claim 1,
**characterised in that** said at least one monitoring parameter is a pressure prevailing in said spray system (30), said detection of a dysfunction by monitoring at least one monitoring parameter comprising a step of detecting that said pressure is less than a pressure threshold predetermined with a pressure sensor (81).

3. Method according to claim 1,
**characterised in that** said main fluid circuit (40) comprises a main check valve (50) configured to be either in a closed state or an open state allowing said lubrication fluid (26) to pass from the reservoir (25) to the spray system (30), said at least one monitoring parameter containing the open or closed state of the main check valve (50), said detection of a dysfunction by monitoring at least one monitoring parameter comprising a step of detecting that said main check valve (50) is in a state different from the open state.

4. Method according to any one of claims 1 to 3,
**characterised in that** said method comprises a step (STPA) of detecting that the mechanical system (5) is operating, said monitoring phase (STPB) being implemented when the mechanical system (5) is operating.

5. Method according to any one of claims 1 to 4,
**characterised in that** said mechanical system (5) is arranged inside an aircraft (2), said first warning contains an authorisation to fly for a first period and the second warning contains an authorisation to fly for a second period shorter than the first period, said third warning holding an authorisation to fly for at least the first period.

6. Method according to any one of claims 1 to 5,
**characterised in that** during the transition phase, the method comprises at least one of the following measurements: measurement of a period between the blocker passing from the open position to the closed position, measurement of a period between the blocker passing from the closed position to the open position, measurement of a period between the blocker passing from the open position to the closed position then to the open position, measurement of an amplitude of displacement of the blocker.

7. Fluid system (20) including a reservoir (25) containing a lubrication fluid (26), said fluid system (20) including a spray system (30) provided with at least one sprayer (33), said fluid system (20) including a main fluid circuit (40) extending from the reservoir to the spray system (30), said fluid system (20) including an emergency fluid circuit (60) extending from the reservoir (25) and joining said spray system (30), said emergency fluid circuit (60) comprises an emergency check valve (70) provided with a blocker (71) moveable from a closed position preventing any circulation of said lubrication fluid (26) to an open position allowing said lubrication fluid (26) to pass from the reservoir (25) to the spray system (30), said fluid system (20) including at last one dysfunction sensor (80) for performing said detection of a dysfunction of claim 1, said fluid system (20) having a position sensor (85) configured to measure a position of the blocker (71), the fluid system (20) having a warning device (90) communicating with the state of emergency sensor (85) and the dysfunction sensor (80),
**characterised in that** said fluid system (20) is configured to apply the method according to any one of claims 1 to 6, said warning device (90) is configured to perform said generation of the first warning and said generation of the second warning and said generation of the third warning.

8. Fluid system (20) according to claim 7,
**characterised in that** said dysfunction sensor (80) comprises a pressure sensor (81) emitting a pressure signal varying according to a pressure prevailing in said spray system (30), said pressure signal being transmitted to the warning device (90).

9. Fluid system (20) according to either one of claims 7 to 8,
**characterised in that** said main fluid circuit (40) comprises a main check valve (50) configured to be either in a closed state or in an open state allowing said lubrication fluid (26) to pass from the reservoir (25) to the spray system (30), said dysfunction sensor (80) comprising a main sensor of state (82) configured to perform the detection that the main check valve (50) is in said open state or said closed state.

10. Fluid system (20) according to any one of claims 7 to 9,
**characterised in that** said fluid system (20) comprises an operation sensor (95) to detect if the mechanical system (5) is operating.

11. Assembly (4) provided with a mechanical system (5) having at least one element (6) to be lubricated and a fluid system (20) for lubricating said at least one element (6) to be lubricated,
**characterised in that** said fluid system (20) is according to any one of claims 7 to 10.

12. Assembly according to claim 11,
**characterised in that** said emergency check valve (70) leads onto the spray system (30).

13. Vehicle (1) including an assembly (4),
**characterised in that** said assembly (4) is according to either one of claims 11 to 12.
